Europäisches Patentamt

(19) European Patent Office

Office européen des brevets

(11) Publication number: **0 014 539**
**A2**

# (12) EUROPEAN PATENT APPLICATION

(21) Application number: **80300219.5**

(22) Date of filing: **23.01.80**

(51) Int. Cl.³: **C 08 L 23/06**
**C 08 L 23/16**

(30) Priority: **07.02.79 US 10138**

(43) Date of publication of application:
**20.08.80 Bulletin 80/17**

(84) Designated Contracting States:
**BE DE FR GB IT SE**

(71) Applicant: **Exxon Research and Engineering Company**
**P.O.Box 390 200 Park Avenue**
**Florham Park New Jersey 07932(US)**

(72) Inventor: **Smith, William Stuart Jr.**
**114 Woodcrest Drive**
**Freehold, New Jersey(US)**

(72) Inventor: **Wilchinsky, Zigmond Walter**
**301 South Wood Avenue**
**Linden, New Jersey(US)**

(74) Representative: **Bawden, Peter Charles**
**Esso Chemical Research Centre P.O. Box 1**
**Abingdon Oxfordshire, OX13 6BB(GB)**

(54) Controlled tackiness in EPM/LDPE blends.

(57) Compositions of matter are disclosed comprising plastic films prepared from blends of various ethylene polymers, such as polyethylene or copolymers of polyethylene, with copolymers of ethylene and propylene which have either (A) a molecular weight, as determined by their Mooney viscosity at 260°F., of less than about 50 and/or an ethylene content of less than about 70%, or (B) a molecular weight, as determined by their Mooney viscosity at 260°F., of greater than about 50 and an ethylene content of greater than about 70 weight percent, and in which the blends have a degree of tackiness, as measured by the force required to separate a pair of films produced from these blends, of greater than about 10 millinewtons·cm. Preferably, the disclosed blends utilize low density polyethylene in admixture with about 1 to 30 weight percent of the ethylene propylene copolymer, and the copolymer has a molecular weight distribution, as measured by GPC, of greater than about 10 MWw/MWn.

The present invention relates to compositions of matter comprising blends of polyethylene and ethylene propylene copolymers. More specifically, the present invention relates to films produced from blends of polyethylene and ethylene propylene copolymers. Still more specifically, the present invention relates to methods for selecting specific ethylene propylene copolymers for use in blends of polyethylene with such copolymers in order to determine the physical properties of the end product thereof.

For many years attempts have been made to modify the physical properties of polyethylene and other ethylene polymers by the addition of various materials, including ethylene propylene elastomer copolymers and the like. This has primarily been done with an eye toward the toughness and stress crack resistance of the ethylene polymer. In the case of low density polyethylene this has specifically been done in an attempt to increase the toughness of this material for use in film applications, such as garbage bags and the like, so as to increase its puncture resistance or impact strength. Materials such as ethylene-vinyl acetate copolymers have thus been employed for such purposes.

As an example, in British Patent No. 1,050,101, assigned to the Monsanto Company, the patentees disclose the improvement in the stress crack resistance of high pressure, low density, ethylene polymers with an ethylene propylene copolymer comprising up to about 10% by weight of the ethylene polymer. The ethylene polymers disclosed include not only polyethylene but also ethylene copolymers containing at least 50% by weight of ethylene.

Similarly, in British Patent No. 924,243, assigned to Farbwerke Hoechst AG, the patentees disclose improvements in the properties of shaped articles comprising high density polyethylene. This patent thus discloses mixing the polyethylene prior to shaping with an amorphous copolymer of ethylene and a higher homologue, such as propylene, and also with ethylene terpolymers.

Canadian Patent No. 642,239, assigned to Phillips Petroleum Company, discloses yet another blend of high density polyethylene with copolymers of ethylene with higher olefins such as propylene. Again in this case the patentee discloses improving the impact strength and resistance to thermal stress cracking of the high density polyethylene thereby.

In Canadian Patent No. 786,412, assigned to Rexall Drug and Chemical Co., improved polypropylene blends are disclosed which include mixtures of polyethylene and ethylene-propylene copolymers. In these blends, which are disclosed as being useful for film as well as other applications, the copolymer contains up to 40% ethylene, and has an intrinsic viscosity of between about 1 and 8. In addition, Canadian Patent No. 789,074, assigned to Union Carbide Canada Ltd., the patentees disclose improved stress crack resistant blends of polyethylene with ethylene-propylene terpolymers, such as those with small amounts of non-conjugated dienes. Neither of these patents discusses the use of blends of these materials which possess surface tackiness or the like. In Canadian Patent 798,416 assigned to Du Pont of Canada, Ltd. blends of ethylene and rubbery ethylene-propylene copolymers are disclosed. These copolymers have Mooney viscosities between about 30 and 100 and preferably between 50 and 85. It should be noted that the preferred blends in this disclosure have Mooney viscosities from 50 to 85 and the disclosure also recommends that amounts of less than 20% of copolymer not be used. These suggestions of the disclosure's preferred embodiments provide blends outside the scope of the present invention. There is no teaching or suggestion of any category of EP copolymer as would import tackiness properties to films made from a blend of ethylene and EP copolymer.

Similarly, British Patent No. 1,084,284, assigned to DuPont disclosed polyethylene blends, including ethylene, and terpolymers of ethylene and propylene. In this patent the terpolymer has a Mooney viscosity of between 30 and 100 (at 100°C) and includes from 25 to 75% ethylene.

Reference is also made to U.S. Patent No. 3,256,366, assigned to Montecatini, which discloses mixing polyethylene, at temperatures higher than its softening point, with copolymers of ethylene and alpha-olefins and a vulcanizing agent subsequently admixed therewith. The particular copolymer of ethylene and propylene is disclosed therein, and both low and high density polyethylene are disclosed. U.S. 3,036,987, also assigned to Montecatini, discloses substantially lowering the brittle point of polypropylene by adding a linear, amorphous copolymer of ethylene and propylene thereto.

Finally, reference is made to a publication of Exxon Chemical Co., U.S.A., entitled "Exxon Elastomers for Polyolefin Modification" published in 1975. This publication, among other things, discloses the modification of both high and low density polyethylene with various elastomers, including some film blends with VISTALON 606, which, however, includes slip or anti-block agents (such as long chain amides or certain mineral fillers at low concentrations, i.e., less than about .5 weight percent) to prevent any tackiness in the final film products.

For use in applications such as films or film laminates there are many cases where it is desired to produce such a film from polyethylene but which has a tacky nature. This would be quite desirable in the case of clinging films, bags for use in packaging applications, industrial packaging, etc. None of these references, however, disclose such a product.

In accordance with the present invention it has now been discovered that by a careful and specific selection of ethylene propylene copolymers having specific properties, the nature of plastic films (less than about 10 mils thick) prepared from blends of these copolymers with polyethylene and other ethylene polymers can have a tacky surface. In particular, applicants have discovered plastic films prepared from blends of ethylene polymer and a copolymer of ethylene and propylene which (A) have molecular weights as determined by their Mooney viscosity at 260°F., of less than about 50, preferably less than about 30 and/or an ethylene content of less than about 70 weight percent, or (B) have molecular weights, as determined by their Mooney viscosity at 260°F., of greater than about 50 and an ethylene content of greater than about 70 weight percent, the mixtures having a degree of tackiness as measured by the force required to separate a pair of such films of greater than about 10 millinewtons/cm.

While not being bound by any particular theory, it is believed that the plastic film compositions of the present invention possess this requisite degree of tackiness as a result of the migration of a portion of the lower molecular weight fraction of these plastic materials, to the surface of these films.

In a preferred embodiment, these film compositions will be substantially free of any anti-block or slip agents which will interfere with or reduce the tackiness of same.

In one embodiment of the present invention the mixture comprises from about 1 to 30 weight percent of the ethylene propylene copolymer.

In a preferred embodiment of the present invention the ethylene polymer employed is low density polyethylene having a density of less than about 0.925 g/cc, and most preferably the ethylene propylene copolymer utilized will have a molecular weight distribution of greater than about 10 $MW_w/MW_n$.

In another preferred embodiment of the present invention the ethylene propylene copolymer will have both a molecular weight of less than about 50 and an ethylene content of less that about 70 weight percent, and in addition will have a molecular weight distribution of less than about 10 $MW_w/MW_n$.

In the blends of the present invention an ethylene polymer can be utilized which is either an ethylene homopolymer or an ethylene copolymer produced employing primarily the same methods as would be used to produce the homopolymer and containing at least about 50 weight percent ethylene. In the preparation of the homopolymer, which is typical of that of the ethylene polymers of this invention, the olefin (ethylene) which is to be polymerized is contacted with a catalyst at elevated temperatures and pressures, preferably in the presence of a solvent or diluent material. The temperature required for such polymerization generally can vary over a wide range, but it is usually preferred to carry out the polymerization reaction at a temperature of between about 150 and 450°F. The particular temperature which, however, is chosen for each individual case will depend upon the catalyst utilized, the specific olefins to be polymerized, and the operating conditions employed such as pressure, space velocities, diluent to olefin ratios, etc.

During this polymerization the pressure is generally maintained at a sufficient level in order to insure a liquid phase reaction, generally between about 100 and 300 psig, again depending upon the types of feed materials and polymerization temperatures to be employed therein. When a mobile catalyst is to be employed the catalyst concentration in the reaction zone is generally maintained from between about 0.01 and about 10 weight percent, and its residence times therein can range from about 10 minutes or less to 10 hours or more.

Preferred polymerization methods are well known in the art, and are specifically described, for example, in Canadian Patent No. 642,239, and U.S. Patent No. 1,050,101.

It is most preferred that in accordance with the present invention a low density polyethylene be utilized as the ethylene polymer therein. That is, a polyethylene having a density of less than about 0.94 grams/cc at 20°C., and most preferably less than about 0.925 g/cc will be employed. These polymers will generally have a crystallinity of at least about 70% at normal atmospheric temperatures. It is also possible, however, to employ high density polyethylenes, i.e. those having a density of at least about 0.94 grams/cc at 20°C., and preferably greater than about 0.96 or higher.

As noted above, it is also possible to employ an ethylene copolymer as the ethylene polymer hereof. As noted, however, in such copolymers the ethylene content will be at least about 50 weight percent. These copolymers are prepared by copolymerizing the ethylene with one or more monoolefinic comonomers having from 3 to 12 carbon atoms per molecule, preferably not more than 4 carbon atoms. Examples of such comonomers include 1-butene, 2-butene, with vinyl esters such as vinyl acetate, ethyl acrylate, or vinyl propionate, being preferred. In the latter case, the copolymers will preferably include more than 90 weight percent of the vinyl acetate.

The ethylene-propylene copolymer which is blended with the ethylene polymer in accordance with the present invention may, for example, be an ethylene-propylene rubber which is a copolymer of ethylene and propylene produced at low pressures using a Ziegler-type polymerization reaction.

As discussed above the selection of the specific ethylene-propylene copolymer employed in the blends of the present invention so as to produce a product which has a tacky surface constitutes the single most critical element of the present invention. In discussing these ethylene propylene copolymers, three specific properties of these copolymers will be discussed. These include the molecular weight distribution, the molecular weight, and the ethylene content. The molecular weight distribution in this case is determined in accordance with gel permeation chromatography analysis of the polymer, and in specific units is defined in terms of the ratio between the weight average molecular weight and the number average molecular weight thereof.

The molecular weight of the ethylene propylene copolymer will be discussed as determined by the Mooney viscosity (large rotor) of this material at 260°F. (ASTM 1646)

Ethylene propylene copolymers can be prepared having a wide range of compositions and weight ratios therein. The molecular weight of individual molecules within a given sample can vary within a very broad range. The ethylene propylene copolymers of the present invention, however, will have molecular weight distributions which are greater than about 10 $MW_w/MW_n$ or less than about 10 $MW_w/MW_n$ in different embodiments thereof.

As for the molecular weight itself, the ethylene-propylene copolymers of the present invention will have a molecular weight, as determined by its Mooney viscosity at 260°F., which is less than about 50, and greater than about 50, again in accordance with various embodiments thereof.

Finally, as for the ethylene content of these ethylene-propylene copolymers as noted above the copolymer used in accordance with the present invention will have less than about 70 weight percent ethylene, or greater than about 70 weight percent ethylene, in the particular embodiments thereof. In particular, the unexpected discovery underlying the present invention concerns the fact that the careful selection of certain of these properties can lead to the obtaining of films which possess the required tackiness set forth herein. With regard to such selection of the ethylene-propylene copolymer component of these films, it is therefore required that either the Mooney viscosity at 260°F be greater than 50 where the ethylene content is greater than about 70 weight percent, or that either the Mooney viscosity at 260°F be less than 50 and/ or the ethylene content be less than about 70 weight percent. Furthermore, while in the preferred composition the molecular weight distribution will be greater than 10 $MW_w/MW_n$, in that case where the Mooney viscosity at 260°F is less than 50 and the ethylene content is less that about 70 weight percent, the molecular weight distribution selected will preferably be less than about 10 $MW_w/MW_n$.

The remaining proportion of the copolymer comprises the propylene component, however certain non-conjugated diolefins can be added to form a terpolymer therewith, i.e. from about 1% up to about 20 to 40 weight percent thereof. In this embodiment EPDM elastomers will be employed. EPDM is the ASTM designation for a terpolymer of ethylene, propylene and a non-conjugated diolefin. In such compounds the ethylene and propylene form a fully saturated backbone of methylene linkages with unsaturated side chains where the non-conjugated diolefin, usually dicyclopentadiene or methylene norbornene is normally attached to provide readily available crosslinking sites for sulphur curing. The EPDM elastomers thus contain a fully saturated backbone which provides outstanding resistance to oxidation, ozone, and cracking, as well as excellent low temperature flexibility.

Finally, the ethylene propylene copolymer component of this invention may also contain a stabilizer or other minor constituents without effecting its ability to impart stress crack resistance to ethylene polymers.

The blends of ethylene polymer and copolymers of ethylene and propylene in accordance with the present invention preferably will be employed in the form of a film, since in that form it can take advantage of the surface tackiness thereof. These films will generally be less than 10 mils thick, but preferably will be less than 2-1/2 mils thick. These compositions can also be blended with other thermoplastic polymers, and fillers, reinforcing agents, foaming agents, and other such components can be added thereto for particular applications. In addition, stabilizing agents and pigments can also be added to color these compositions or to further improve their physical properties. However, in order to meet the tackiness requirements of this invention, the film blends should be substantially free of anti-block or slip agents, such as long chain amides, (e.g., less than .5 weight percent) or certain mineral fillers.

In the preparation of the compositions of the present invention, the ethylene-propylene copolymer is incorporated into the ethylene polymer or polyethylene component by a variety of conventional methods, such as the use of a batch type Banbury mixer, a continuous intensive mixer, mixing extruders, etc. Such a blending operation can be conducted at temperatures above the softening points of the ethylene polymer and can be continued until a homogeneous composition is obtained. Generally temperatures in the range of about 250 to 350°F. are satisfactory for the preparation of homogeneous compositions thereof.

The following examples will further illustrate the subject matter of the present invention:

EXAMPLE

A low density polyethylene having a 2.0 melt index and a density of 0.918 g/cc was utilized herein.

This low density polyethylene was blended with a variety of ethylene-propylene copolymers, having a variety of molecular weight distributions, molecular weights, and ethylene contents, as follows:

<u>Ethylene Propylene Copolymer Properties</u>

| Ethylene-Propylene Copolymer | Molecular Weight Distribution[1] | Molecular Weight[2] | Ethylene Content[3] |
|---|---|---|---|
| A [Vistalon 606] | High | High | Low |
| B [Vistalon 702] | High | Low | High |
| C [Vistalon 404] | High | Low | Low |
| D | Low | High | High |
| E | Low | High | Low |
| F | Low | Low | High |
| G | Low | Low | Low |

[1] High = > 10 Mw/Mn; Low = < 10 Mw/Mn

[2] Via Mooney viscosity at 260°F, High = > 50; Low = < 50

[3] Weight percent, High = > 70; Low = < 70

- 10 -

In each of these cases, employing a blend of 90% of the low density polyethylene and 10% of the respective ethylene propylene copolymer components, as well as in the case of 100% of the low density polyethylene, the products were tested for the degree of tackiness. This was carried out by employing a test similar to ASTM-D-1893, wherein a pair of films of the material to be tested were prepared and placed in surface contact with each other and pressure of 1 kPa and a temperature of about 60°C was applied. After a time of 64 hours the force necessary to separate the films was measured by inserting a thin rod between the two layers and measuring the force required to separate the layers by moving the rod at a rate of 2 inches per minute. As shown in Table I below, this tackiness was measured in terms of millinewtons per centimeter. Again all of the results obtained are contained in Table I hereinbelow.

As can be seen from Table I the preparation of a blend of ethylene polymer and ethylene-propylene copolymer resulted in a significant degree of surface tackiness in those cases where either the ethylene-propylene copolymer had a molecular weight of less than about 50, the ethylene content of the ethylene propylene copolymer was less than about 70%, or both of these factors were utilized. In all of those cases the degree of tackiness was measured by the above-noted test to be greater than about 10 millinewtons/cm.

The results shown in Table I also demonstrate the preferred embodiment of the present invention where in addition to the above factors the ethylene propylene copolymer has a molecular weight distribution greater than about 10 $MW_w/MW_n$. In each of these cases the resultant films had a degree of tack which was greater than about 20 millinewtons/cm. Having thus described the present invention, it will be understood that various alterations can

- 12 -

be made in the details of its practice without departing from the spirit thereof, and it is intended that these be included in the scope of the appended claims.

TABLE I

| | Blend | ETHYLENE-PROPYLENE COPOLYMER COMPONENT | | | TACKINESS DETERMINATION * | |
|---|---|---|---|---|---|---|
| Run # | % Poly-ethylene | Mol. Wt. Dist. $MW_w/MW_n$ | Mol. Wt. Via Mooney Visc. at 260°F | Ethylene Content, % | Value Millinewtons/cm | General Description |
| 1 | 100 | – | – | – | 0 | Tack Free |
| 2 | 90 | 11.1 | 62 | 50 | > 20 | Extremely Tacky |
| 3 | 90 | 25:1 | 27 | 72 | > 20 | Extremely Tacky |
| 4 | 90 | 26:1 | 27 | 40 | > 20 | Extremely Tacky |
| 5 | 90 | 3:1 | 50 | 76 | 4 | Essentially Tack Free |
| 6 | 90 | 3:1 | 75 | 67 | 12 | Moderately Tacky |
| 7 | 90 | 3:1 | 27 | 76 | 44 | Moderately Tacky |
| 8 | 90 | 3:1 | 27 | 67 | > 20 | Extremely Tacky |

* On film made from blend

WHAT WE CLAIM IS:

1. A plastic film comprising a blend of ethylene polymer and about 1 to 30 weight percent of a copolymer of ethylene and propylene said copolymer of ethylene and propylene characterized by:

(A) a molecular weight as determined by its Mooney viscosity at 260°F of less than about 50;

(B) an ethylene content of less than about 70%; or

(C) both (A) and (B).

2. A plastic film according to claim 1 characterized in that said ethylene polymer comprises polyethylene.

3. A plastic film according to claim 2 characterized in that said polyethylene comprises low density polyethylene.

4. A plastic film according to claim 1 characterized in that said polyethylene comprises a copolymer of ethylene with a monoolefinic comonomer having from 3 to 12 carbon atoms per molecule.

5. A plastic film according to claim 4 characterized by up to about 50 weight percent of said comonomer.

6. A plastic film according to claims 1-5 characterized in that said ethylene propylene copolymer has a molecular weight distribution of greater than about 10 $MW_w/MW_n$.

7. A plastic film according to claims 1-5 characterized in that said copolymer of ethylene and propylene includes a combination of properties (A) and (B), and further wherein said copolymer of ethylene and propylene has a molecular weight distribution of less than about 10 $MW_w/MW_n$.

8. A plastic film according to claims 1-7 characterized in that said blend is substantially free of any anti-block or slip agents.

9. A plastic film according to claims 1-8 characterized in that said copolymer of ethylene and propylene comprises a terpolymer of ethylene propylene and a non-conjugated diene.

10. A plastic film according to claims 1-9 characterized in that the molecular weight in (A) is less than about 30.

11. A plastic film comprising a blend of ethylene polymer and a copolymer of ethylene and propylene, said copolymer of ethylene and propylene characterized by a molecular weight, as determined by its Mooney viscosity at 260°F, of greater than about 50 a molecular weight distribution of greater than about 10 $MW_w/MW_n$ and an ethylene content of greater than about 70%, said mixture further characterized by a degree of tackiness as measured by the force required to separate a pair of said plastic films of greater than about 10 millinewtons per centimeter.

12. A plastic film according to claim 11 characterized in that said ethylene polymer is high density polyethylene on low density polyethylene.

13. A plastic film according to claim 11 or 12 characterized in that said copolymer of ethylene and propylene comprises a terpolymer of ethylene, propylene and a non-conjugated diene.